# EUROPÄISCHE PATENTSCHRIFT

(11) **EP 2 463 692 B1**
(45) Veröffentlichungstag und Bekanntmachung des Hinweises auf die Patenterteilung: **16.12.2015**
(21) Anmeldenummer: 11450134.9
(22) Anmeldetag: 17.10.2011
(51) Int. Cl.: G02B 5/04, G02B 23/18, G02B 17/04

(54) **Prisma**
Prism
Prisme

(30) Priorität: 07.12.2010 AT 20282010
(43) Veröffentlichungstag der Anmeldung: 13.06.2012
(73) Patentinhaber: Perger, Andreas, 1230 Wien (AT)
(72) Erfinder: Perger, Andreas, 1230 Wien (AT)
(74) Vertreter: Weiser, Andreas

(56) Entgegenhaltungen:
- WO-A1-98/20378
- DE-C- 850 079
- GB-A- 304 721
- US-A1- 2002 057 496
- US-A1- 2002 075 449
- US-B1- 6 178 052

## Beschreibung

Die vorliegende Erfindung betrifft ein Porroprisma zweiter Art, aus zumindest zwei miteinander verbundenen Umkehrprismen, die jeweils zwischen einer Ein- und einer Austrittsfläche zwei reflektierende Schrägflächen für den Strahlengang darbieten, wobei die Austrittsfläche des einen und die Eintrittsfläche des anderen Umkehrprismas ihre Verbindungsfläche bilden, gemäß dem Oberbegriff des Anspruchs 1.

Porroprismen, benannt nach ihrem Erfinder Ignazio Porro, sind klassische Umkehrsysteme für Feldstecher, Fernrohre usw. Durch die vierfache Strahlumlenkung wird eine vollständige Bildumkehr, d.h. sowohl horizontal als auch vertikal, erreicht. Im Vergleich zu anderen Umkehrsystemen, beispielsweise Uppendahl-, Schmidt-Pechan- oder Abbe-König-Prismen, sind Porroprismen aufgrund der geringen Anzahl von Spiegelungen äußerst verlustarm und durch die Verwendung von insbesondere totalreflektierenden Schrägflächen anstelle von Spiegelschichten kostengünstig herstellbar. Ein Nachteil von Porroprismen ist jedoch ihr beträchtlicher Strahlversatz zwischen einfallendem und ausfallendem Strahl, der zu einer dementsprechend sperrigen Bauform führt, wie sie sich beispielsweise in dem z-förmigen Aussehen der beiden Hälften eines klassischen Feldstechers niederschlägt.

Die Erfindung setzt sich zum Ziel, ein Porroprisma zu schaffen, das einen geringeren Strahlversatz beim Strahldurchtritt zur Folge hat als die bekannten Bauformen. Dieses Ziel wird mit einem Porroprisma der einleitend genannten Art erreicht, welches sich dadurch auszeichnet, daß die Verbindungsfläche schräg zu den optischen Achsen jener Abschnitte des Strahlengangs liegt, die die freiliegenden Ein- und Austrittsflächen der Umkehrprismen senkrecht durchsetzen.

Durch die erfindungsgemäße Schrägstellung der Verbindungsfläche wird unter Beibehaltung des Lichtein- und -austrittsquerschnitts an den äußeren Ein- und Austrittsflächen des Porroprismas eine fortlaufende Reduzierung bzw. Verengung des Strahlquerschnitts gegen die Mitte des Prismas hin bewirkt, welche einerseits den Strahlversatz des Porroprismas verringert, weil sich die gegenläufig verengten Strahlquerschnitte näher kommen als bei einem herkömmlichen Porroprisma, und anderseits am üblichen Einbauort des Prismas in einem Fernrohr oder Feldstecher zwischen Objektiv und Brennpunkt zu keiner nennenswerten Beeinträchtigung führt, sondern lediglich zu einem geringfügigen Helligkeitsabfall zum Bildfeldrand ("Vignettierung"). Im Ergebnis kann ein geringer Strahlversatz ohne signifikante Nachteile erreicht werden.

Eine bevorzugte Ausführungsform der Erfindung zeichnet sich dadurch aus, daß die Umkehrprismen entlang ihrer Verbindungsfläche in jene Richtung parallelverschoben sind, welche die genannten optischen Achsen einander nähert. Dadurch kann der Strahlversatz beim Durchtritt durch das Porroprisma - bei geringfügig verlängerter Bauform - noch weiter verringert werden.

Gemäß weiteren bevorzugten Ausführungsformen der Erfindung wird vorgesehen, daß der vom einen zum anderen Umkehrprisma verlaufende Strahlengangabschnitt schräg zu den genannten optischen Achsen liegt, und bevorzugt die Schrägflächen der Umkehrprismen so gestellt sind, daß die ersten beiden Abschnitte des Strahlengangs einerseits und die letzten beiden Abschnitte des Strahlengangs anderseits jeweils in zueinander geneigten Ebenen liegen. Hiermit lassen sich die genannten optischen Achsen jeweils noch weiter aneinander annähern, d.h. der Strahlversatz noch weiter verringern, günstigstenfalls sogar bis auf Null. Um eine exakte Bilddrehung von zweimal 180°, d.h. einmal vertikal um 180° und einmal horizontal um 180°, zu erhalten, werden dazu bevorzugt beide Schrägflächen beider Umkehrprismen in ihrer Schrägstellung aufeinander abgestimmt.

Aufgrund der Schrägstellung der Verbindungsfläche tritt der diese durchsetzende mittlere Abschnitt des Strahlengangs in der Regel nicht mehr senkrecht durch diese hindurch. Gemäß einem weiteren bevorzugten Merkmal der Erfindung kann daher die Verbindungsfläche auch dazu verwendet werden, einen Lichtanteil aus dem Strahlengang aus- und/oder in diesen einzukoppeln, indem sie teilreflektierend gestaltet wird. Damit kann beispielsweise ein Meßstrahl für ein Meßgerät aus dem Strahlengang aus- oder ein Anzeigebild eines Displays in den Strahlengang eingekoppelt werden. Wird der Ein- bzw. Auskopplungswinkel entsprechend gewählt, kann dafür Sorge getragen werden, daß der ein- bzw. ausgekoppelte Lichtstrahl an einer der Flächen der Umkehrprismen verlustfrei rechtwinkelig austritt.

Die Erfindung wird nachstehend anhand von in den beigeschlossenen Zeichnungen dargestellten Ausführungsbeispielen näher erläutert. In den Zeichnungen zeigt:
Fig. 1 ein Porroprisma zweiter Art nach dem Stand der Technik in der Stirnansicht (Fig. 1a), der Draufsicht (Fig. 1b), der Seitenansicht (Fig. 1c) und der Perspektivansicht (Fig. 1d);
Fig. 2 eine erste Ausführungsform eines Porroprismas gemäß der Erfindung in der Stirnansicht (Fig. 2a), der Draufsicht (Fig. 2b), der Seitenansicht (Fig. 2c) und der Perspektivansicht (Fig. 2d);
Fig. 3 eine zweite Ausführungsform eines Porroprismas gemäß der Erfindung in der Stirnansicht (Fig. 3a), der Draufsicht (Fig. 3b), der Seitenansicht (Fig. 3c) und der Perspektivansicht (Fig. 3d); und
Fig. 4 eine dritte Ausführungsform eines Porroprismas der Erfindung in der Stirnansicht (Fig. 4a), der Draufsicht (Fig. 4b) und der Seitenansicht (Fig. 4c).

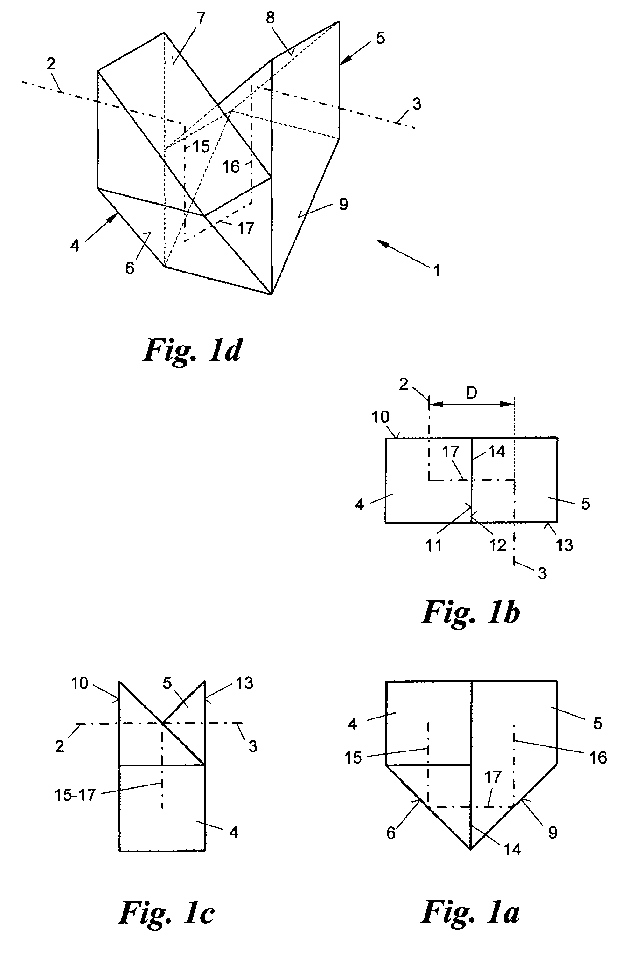

Fig. 1 zeigt ein Porroprisma 1 vom sogenannten "Porro-Typ zweiter Art", bei welchem also die Ein- und Ausfallsstrahlen des Porroprismas, genauer die optischen Achsen 2, 3 der ein- und austretenden Abschnitte des Strahlengangs, zueinander parallel sind und einem Parallelversatz D unterliegen.

Ein Porroprisma zweiter Art wie das Porroprisma 1 kann beispielsweise aus zwei miteinander verbundenen Umkehrprismen 4, 5 aufgebaut werden, die jeweils über zwei reflektierende Schrägflächen 6, 7 bzw. 8, 9 verfügen, die zwischen ihren Ein- bzw. Austrittsflächen 10, 11 bzw. 12, 13 liegen.

Die Schrägflächen 6 - 9 sind bevorzugt totalreflektierend, d.h. reflektieren aufgrund des physikalischen Effekts der Totalreflexion an der Grenzschicht Prismamaterial - Luft, könnten aber auch mit einer gesonderten Spiegelschicht versehen sein. Der hier verwendete Begriff "reflektierende Schrägflächen" umfaßt beide Varianten, sowohl Totalreflexion als auch Spiegelschichtreflexion.

In jedem einzelnen Umkehrprisma 4, 5 des Porroprismas von Fig. 1 stehen die Schrägflächen 6, 7 bzw. 8, 9 so winkelig zueinander, daß die Reflexionen daran in Ebenen erfolgen, welche zueinander senkrecht stehen. Die Austrittsfläche 11 des einen Umkehrprismas 4 liegt direkt an der Eintrittsfläche 12 des anderen Umkehrprismas 5 an, z.B. ist sie mit dieser transparent verkittet oder überhaupt einstückig ausgeführt. Die derart miteinander verbundenen Ein- und Austrittsflächen 11, 12 bilden somit eine Verbindungsfläche 14 zwischen den Umkehrprismen 4, 5.

Durch die geschilderte Anordnung nimmt der Strahlengang durch das Porroprisma 1 den in den Fig. 1a bis 1d gezeigten Verlauf ein, mit zwei an seine Ein- und Austrittsabschnitte 2, 3 anschließenden Abschnitten 15, 16, die in jedem Umkehrprisma 4, 5 jeweils zwischen dessen Schrägflächen 6, 7 bzw. 8, 9 verlaufen, und einem Mittelabschnitt 17, der die Verbindungsfläche 14 durchsetzend von der Schrägfläche 6 des einen Umkehrprismas 4 zur Schrägfläche 9 des anderen Umkehrprismas 5 verläuft.

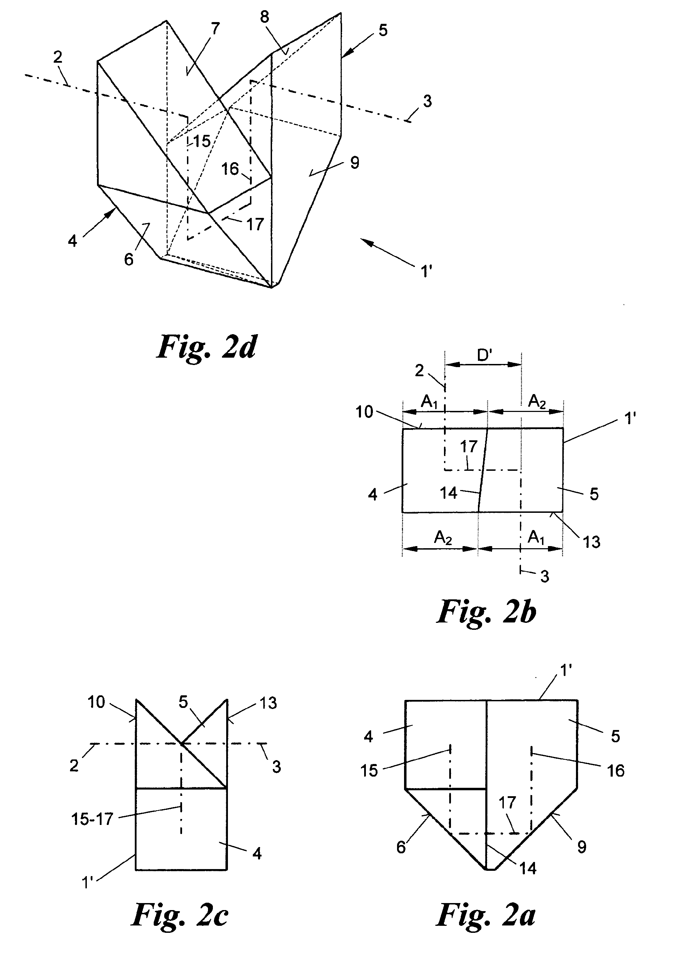

Fig. 2 zeigt eine erste Ausführungsform eines Porroprismas 1' gemäß der Erfindung. Gleiche Bezugszeichen bezeichnen gleiche Teile wie in Fig. 1, und im Folgenden wird nur auf die Unterschiede gegenüber dem herkömmlichen Porroprisma 1 von Fig. 1 eingegangen.

Die Verbindungsfläche 14 des Porroprismas 1' ist schräg zu den optischen Achsen 2, 3 der Ein- und Ausfallsstrahlen angeordnet, d.h. jener Abschnitte 2, 3 des Strahlengangs 2-15-17-16-3 durch das Porroprisma 1', welche durch seine freiliegenden (nicht verbundenen) Ein- und Austrittsflächen 10, 13 hindurchtreten. Dadurch kann der Versatz D zwischen den Ein- und Ausfallsachsen 2, 3 auf einen reduzierten Versatz D' verringert werden, wie insbesondere aus Fig. 2b ersichtlich ist: Die Ein- und Austrittsquerschnitte A₁ an den Ein- und Austrittsflächen 10, 13 bleiben gegenüber dem herkömmlichen Porroprisma 1 von Fig. 1 unverändert, wogegen die Schrägflächen 7, 8 und 6, 9 - in Richtung des Strahlengangs zum Inneren des Prismas gesehen - gegenläufig trapezförmig auf reduzierte Querschnitte A₂ verjüngt sind. Dadurch ergibt sich zwar eine Verringerung des zur Verfügung stehenden Strahlquerschnitts bzw. Strahldurchmessers, je weiter das Licht in das Porroprisma 1' eindringt, was jedoch an jener Stelle in einem herkömmlichen Fernrohr, Feldstecher od.dgl., wo solche Prismen als Umkehrsysteme eingesetzt werden, lediglich zu einer sog. "Vignettierung", einem geringfügigen Helligkeitsabfall zum Bildfeldrand hin, führt.

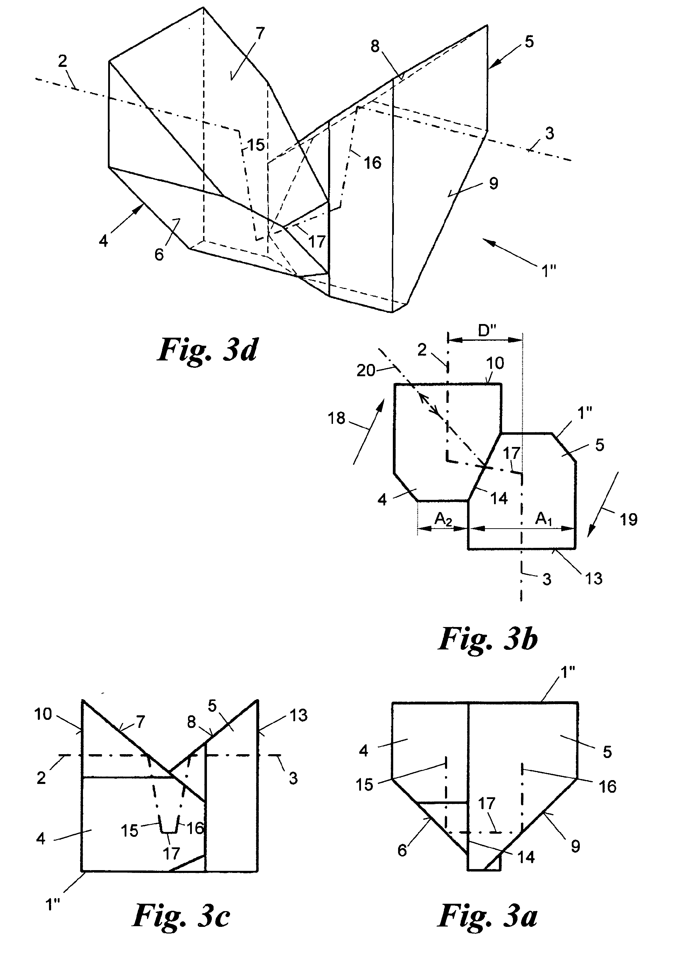

Fig. 3 zeigt eine Weiterbildung des Porroprismas 1' von Fig. 2 zu einem Porroprisma 1", das zu einem noch geringeren Achsenversatz D" des Strahlengangs 2-15-17-16-3 führt. Wieder bezeichnen gleiche Bezugszeichen dieselben Teile wie in den Fig. 1 und 2, und im Folgenden wird nur auf die Unterschiede gegenüber Fig. 2 eingegangen.

Bei der Ausführungsform 1" von Fig. 3 sind die beiden Umkehrprismen 4, 5 entlang ihrer schrägen Verbindungsfläche 14 parallelverschoben, und zwar in Richtung der Pfeile 18, 19, was zwar die Baulänge des Porroprismas 1" verlängert, jedoch den Strahlversatz D" zwischen den Ein- und Ausfallsachsen 2, 3 nochmals reduziert. Um den Strahlquerschnitt in der Mitte des Porroprismas 1" nicht unnötig zu verengen, werden zusätzlich die Schrägflächen 6, 7 und 8, 9 der Umkehrprismen 4, 5 so verstellt, daß die Reflexionen an den Schrägflächen 7, 8 nicht mehr unter einem Winkel von 45° zum Lot, sondern einem größeren Winkel von z.B. 50° bis 60° zum Lot erfolgen. Damit wird der Strahlengang an den Schrägflächen 7, 8 um mehr als 90° abgelenkt. Die Schrägflächen 7, 8 sind so angepaßt, daß der mittlere Abschnitt 17 nicht mehr quer zu den Ein- und Ausfallsachsen 2, 3 sondern schräg zu diesen verläuft, siehe Fig. 3b. Die Strahlengangabschnitte 15, 16 in den Umkehrprismen 4, 5 liegen dadurch auch nicht mehr parallel zueinander. Allerdings liegen sie in zwei zueinander parallelen Ebenen, welche von den Abschnitten 2 und 15 einerseits und 3 und 16 anderseits aufgespannt werden.

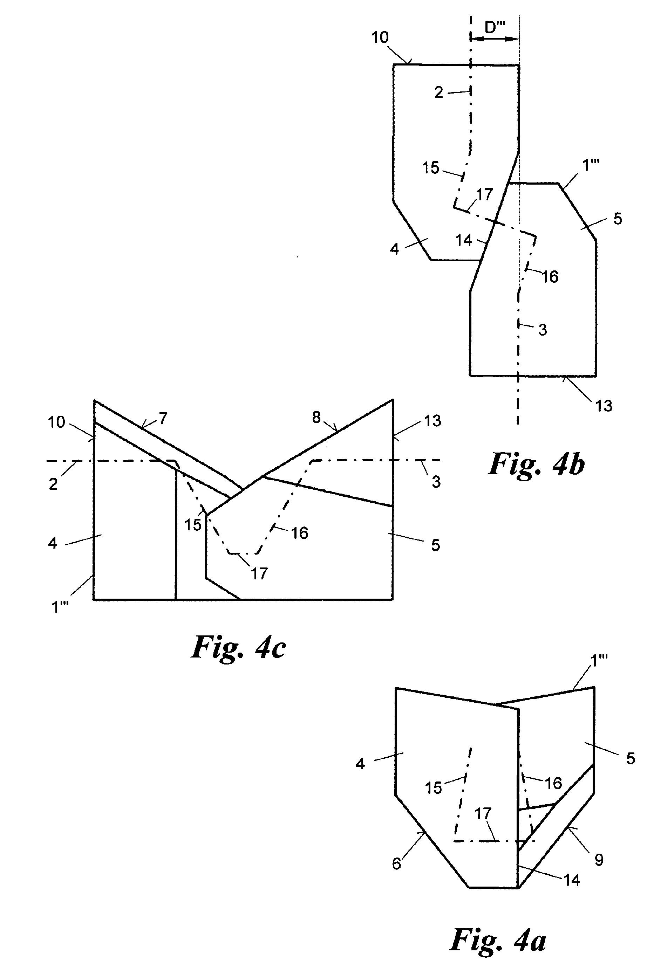

Fig. 4 zeigt noch eine weitere Modifikation des Porroprismas von Fig. 3 in Form eines Porroprismas 1 "' mit nochmals reduziertem Strahlversatz D'''. Wieder bezeichnen gleiche Bezugszeichen dieselben Teile wie in den Fig. 1 bis 3, und im Folgenden wird nur auf die Unterschiede gegenüber dem Porroprisma 1" von Fig. 3 eingegangen.

Bei der Ausführungsform von Fig. 4 werden alle vier Schrägflächen 6 - 9 so verstellt, daß die Strahlabschnitte 15, 16 - mit ihren jeweils angrenzenden Strahlabschnitten 2, 3 betrachtet - nicht mehr in zueinander parallelen Ebenen liegen, siehe Fig. 4a im Vergleich zu Fig. 3a.

Der Strahlengang 2-15-17-16-3 durch das Porrorprisma 1"' ist durch Schrägstellen der Schrägflächen 6 - 9 so gefaltet, daß der Strahlversatz D"' zwischen den Ein- und Ausfallsachsen 2, 3 minimal wird, im Idealfall Null. Es sind hiefür lediglich die Grenzwinkel der Totalreflexion an den Schrägflächen 6 - 9 (wenn diese mittels Totalreflexion reflektieren) und die Randbedingung zu beachten, daß eine exakte zweimalige Bilddrehung um jeweils 180°, d.h. einmal vertikal um 180° und einmal horizontal um 180°, erreicht wird.

Bei all jenen Ausführungsformen der Fig. 2 bis 4, bei welchen der Strahlengang-Mittelabschnitt 17 die Verbindungsfläche 14 nicht lotrecht durchsetzt, kann die Verbindungsfläche 17 zum Ein- und Auskoppeln eines Lichtanteils aus dem Strahlengang verwendet werden, siehe den beispielhaften Ein- bzw. Auskopplungsstrahl 20 in Fig. 3b. Dazu kann die Verbindungsfläche 17 - z.B. vor dem Zusammenbau der beiden Umkehrprismen 4, 5 zum Porroprisma 1', 1", 1''' - mit einer teilreflektierenden bzw. teildurchlässigen Beschichtung versehen werden. Der Ein- bzw. Auskopplungsstrahl 20 kann so reflektiert und die Außenform der Umkehrprismen 4, 5 so gestaltet werden, daß er eine der Außenflächen der Umkehrprismen 4 bzw. 5 lotrecht durchsetzt, um möglichst verlustfrei ein- bzw. auszutreten. Über den Ein- bzw. Auskopplungsstrahl 20 kann beispielsweise ein Meßstrahl für ein Meßgerät aus- oder ein Lichtstrahl eines Anzeigegeräts (Displays) eingekoppelt werden.

Es versteht sich, daß die gezeigten Porroprismenformen 1', 1 ", 1 "' nicht notwendigerweise aus nur zwei Umkehrprismen 4, 5 der gezeigten Form zusammengesetzt bzw. aufgebaut werden können, sondern auch aus anderen geometrischen Körpern, solange die genannten reflektierenden Schrägflächen 6 bis 9 bzw. Strahlengangabschnitte 2, 15, 17, 16, 3 erreicht werden. Bei einer einstückigen Ausführung oder bei einer anderen Segmentierung der Porroprismen 1', 1 ", 1''' kann die Verbindungsfläche 14 demgemäß auch statt einer physischen Kittfläche eine bloß virtuelle (gedachte) Verbindungsfläche zweier funktioneller Umkehrprismen 4, 5 sein. Als Material für die Umkehrprismen 4, 5 eignet sich jegliches bekannte optische Material wie Glas, Kunststoff, Kristalle usw.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Porroprisma (1', 1", 1"') zweiter Art, bei dem die optischen Achsen der ein- und austretenden Abschnitte des Strahlengangs zueinander parallel sind und einem Parallelversatz unterliegen, aus zumindest zwei einstückig oder zusammengesetzt miteinander verbundenen Umkehrprismen (4, 5), die jeweils zwischen einer Ein- und einer Austrittsfläche (10 - 13) zwei reflektierende Schrägflächen (6 - 9) für den Strahlengang (2, 15, 17, 16, 3) darbieten, wobei die Austrittsfläche (11, 12) des einen und die Eintrittsfläche (12, 11) des anderen Umkehrprismas (4, 5) ihre Verbindungsfläche (14) bilden, **dadurch gekennzeichnet, dass** die Verbindungsfläche (14) schräg zu den optischen Achsen (2, 3) jener Abschnitte des Strahlengangs (2, 15, 17, 16, 3) liegt, die die freiliegenden Ein- und Austrittsflächen (10, 13) der Umkehrprismen (4, 5) senkrecht durchsetzen.

2. Porroprisma nach Anspruch 1, **dadurch gekennzeichnet, daß** die Umkehrprismen (4, 5) entlang ihrer Verbindungsfläche (14) in jene Richtung (18, 19) parallelverschoben sind, welche die genannten optischen Achsen (2, 3) einander nähert.

3. Porroprisma nach Anspruch 1 oder 2, **dadurch gekennzeichnet, daß** der vom einen (4) zum anderen Umkehrprisma (5) verlaufende Strahlengangabschnitt (17) schräg zu den genannten optischen Achsen (2, 3) liegt.

4. Porroprisma nach Anspruch 3, **dadurch gekennzeichnet, daß** die Schrägflächen (6 - 9) der Umkehrprismen (4, 5) so gestellt sind, daß die ersten beiden Abschnitte (2, 15) des Strahlengangs einerseits und die letzten beiden Abschnitte (3, 16) des Strahlengangs anderseits jeweils in zueinander geneigten Ebenen liegen.

5. Porroprisma nach einem der Ansprüche 1 bis 4, **dadurch gekennzeichnet, daß** die Verbindungsfläche (14) teilreflektierend gestaltet ist, um einen Lichtanteil (20) aus dem Strahlengang (2, 15, 17, 16, 3) aus- und/oder in diesen einzukoppeln.

## Claims

1. Porro prism (1', 1", 1"') of the second type, wherein the optical axes of the incident and emerging sections of the beam path are parallel to one another and are subject to a parallel offset, consisting of at least two reversing prisms (4, 5) interconnected in an integral or assembled manner, which respectively provide two reflective inclined surfaces (6 - 9) for the beam path (2, 15, 17, 16, 3) between an entry surface and an exit surface (10 - 13), wherein the exit surface (11, 12) of one reversing prism and the entry surface (12, 11) of the other reversing prism (4, 5) form their respective connecting surface (14), **characterized in that** the connecting surface (14) lies obliquely to the optical axes (2, 3) of the sections of the beam path (2, 15, 17, 16, 3) that perpendicularly penetrate the exposed entry and exit surfaces (10, 13) of the reversing prisms (4, 5).

2. Porro prism according to Claim 1, **characterized in that** the reversing prisms (4, 5) are shifted parallel to one another along their connecting surface (14) in the direction (18, 19) in which the aforementioned optical axes (2, 3) are moved closer to one another.

3. Porro prism according to Claim 1 or 2, **characterized in that** the beam path section (17) extending from one reversing prism (4) to the other reversing prism (5) lies obliquely to the aforementioned optical axes (2, 3).

4. Porro prism according to Claim 3, **characterized in that** the inclined surfaces (6 - 9) of the reversing prisms (4, 5) are positioned such that the first two sections (2, 15) of the beam path on the one hand and the last two sections (3, 16) of the beam path on the other hand lie each in planes that are inclined relative to one another.

5. Porro prism according to one of Claims 1 - 4, **characterized in that** the connecting surface (14) is realized in a partially reflective manner in order to decouple and/or couple a part (20) of the light from/into the beam path (2, 15, 17, 16, 3).

## Revendications

1. Prisme de Porro (1', 1", 1"') de deuxième type, dans lequel les axes optiques des parties entrante et sortante du trajet du faisceau sont parallèles l'un à l'autre et sont soumis à un décalage parallèle, constitué d'au moins deux prisme d'inversion (4, 5) formés d'un seul tenant ou rassemblés en étant reliés ensemble, qui chacun présentent deux surfaces inclinées (6 à 9) réfléchissantes pour le trajet du faisceau (2, 15, 17, 16, 3) entre une surface d'entrée et une surface de sortie (10 à 13), dans lequel la surface de sortie (11, 12) de l'un des prismes d'inversion (4, 5) et la surface d'entrée (12, 11) de l'autre prisme forment leur surface de raccordement (14), **caractérisé en ce que** la surface de raccordement (14) se situe inclinée par rapport aux axes optiques (2, 3) des parties du trajet du faisceau (2, 15, 17, 16, 3) qui coupent perpendiculairement les surfaces d'entrée et de sortie (10, 13) libres des prismes d'inversion (4, 5).

2. Prisme de Porro selon la revendication 1, **caractérisé en ce que** les prismes d'inversion (4, 5) sont décalés parallèlement le long de leur surface de raccordement (14) dans cette direction (18, 19) qui rapproche lesdits axes optiques (2, 3) l'un de l'autre.

3. Prisme de Porro selon la revendication 1 ou 2, **caractérisé en ce que** la partie de trajet du faisceau (17) s'étendant de l'un (4) à l'autre (5) des primes d'inversion se situe inclinée par rapport auxdits axes optiques (2, 3).

4. Prisme de Porro selon la revendication 3, **caractérisé en ce que** les surfaces inclinées (6 à 9) des prismes d'inversion (4, 5) sont positionnées de manière que les deux premières parties (2, 15) du trajet du faisceau d'une part et les deux dernières parties (3, 16) du trajet du faisceau d'autre part se situent dans des plans inclinés l'un par rapport à l'autre.

5. Prisme de Porro selon l'une des revendications 1 à 4, **caractérisé en ce que** la surface de raccordement (14) est conçue partiellement réfléchissante afin de découpler et/ou coupler une partie (20) de lumière du trajet du/au faisceau (2, 15, 17, 16, 3).
